# EUROPEAN PATENT APPLICATION

(11) **EP 4 810 782 A1**
(43) Date of publication of application: **23.09.2026**
(21) Application number: 23958900.5
(22) Date of filing: 17.11.2023
(51) Int. Cl.: F02C 7/00, F02K 3/06

(54) **METHOD FOR MANUFACTURING FAN BLADE MADE OF FIBER-REINFORCED COMPOSITE MATERIAL**

(71) Applicant: IHI Aerospace Co., Ltd., Tomioka-shi, Gunma 370-2398 (JP); IHI Corporation, Tokyo 135-8710 (JP)
(72) Inventor: SHIMAZU, Yasuhiro, Tomioka-shi, Gunma 370-2398 (JP); TANAKA, Shinichi, Tomioka-shi, Gunma 370-2398 (JP); INADA, Takaomi, Tokyo 135-8710 (JP)
(74) Representative: Epping - Hermann - Fischer
(86) International application number: PCT/JP2023/041383
(87) International publication number: WO 2025/104898

(57) **Abstract**

Provided is a method capable of manufacturing a fan blade made of a fiber-reinforced composite material having a complicated three-dimensional shape without causing a defect while ensuring necessary tensile strength.

The method includes: regarding the fan blade as a laminate; approximating each layer constituting the laminate as a plurality of strip-shaped bodies arranged in a direction transverse to a longitudinal direction, each having a constant width over an entire length in the longitudinal direction in a developable surface shape; molding strip-shaped UD prepreg made of the fiber-reinforced composite material into a planar shape obtained by developing each of the developable surfaces; forming the laminate by repeating a process of forming each of the layers by laminating the strip-shaped UD prepreg on a mold; and molding the formed laminate.

## Description

### Technical Field

The present disclosure relates to a method for manufacturing a fan blade made of a fiber-reinforced composite material for a turbofan engine.

### Background Art

A turbofan engine, which is a propulsion engine for aircraft, consists of a fan and a core engine disposed behind and coaxially with the fan and including a turbine for driving the fan.

The fan includes a substantially cylindrical fan case, a substantially cylindrical fan disk configured to rotate inside the fan case, and a plurality of fan blades attached to an outer periphery of the fan disk. The fan disk is driven to rotate by the turbine coupled via a shaft.

During operation of the turbofan engine, air is drawn into the fan as the fan blades rotate together with the fan disk. Some of the air pressurized by the fan flows into the core engine, generating high-temperature and highpressure gas for driving the turbine, and the remaining air bypasses the core engine and is exhausted from the rear, contributing to generation of most of the thrust.

Many fan blades for turbofan engines are manufactured from fiber-reinforced composite materials, such as carbon fiber-reinforced plastic (CFRP), to reduce weight. During the operation of the turbofan engine, centrifugal force acts on the fan blades, and the direction of the centrifugal force coincides with the spanwise direction (the direction from the hub to the tip of the blade). Therefore, in the fan blades made of fiber-reinforced composite materials, reinforcing fibers are predominantly oriented in the spanwise direction in order to increase the tensile strength against the centrifugal force. On the other hand, in order to provide resistance against local impacts such as bird strikes, many fan blades are manufactured by combining a plurality of reinforcing fibers oriented in directions different from the spanwise direction.

As described above, fan blades made of fiber-reinforced composite materials are usually manufactured by laminating unidirectional (UD) prepreg. The UD prepreg is a material in which a matrix resin is impregnated into reinforcing fibers aligned to be oriented in one direction. A fan blade made of a fiber-reinforced composite material can be produced by preparing UD prepregs having an appropriate shape and laminating the UD prepregs on a mold.

Meanwhile, fan blades of modern turbofan engines are configured to have complicated three-dimensional shapes in order to improve aerodynamic performance and reduce noise. Conventional methods for manufacturing such fan blades using UD prepregs of fiber-reinforced composite materials include the following methods.

As a first method, a three-dimensional shape of a fan blade is approximated as a polyhedron, and UD prepregs cut into shapes of respective surfaces of the polyhedron are laminated on a mold and molded.

However, the polyhedron described above usually has a site where a plurality of surfaces are arranged in the spanwise direction of the fan blade. Therefore, the fan blade manufactured by this method includes a site where a plurality of UD prepregs are arranged in the spanwise direction, and in such a site, reinforcing fibers are not continuous over the entire spanwise direction, which has a problem that required tensile strength cannot be obtained. In addition, it is necessary to prepare a large number of UD prepregs having different shapes and manage the UD prepregs in association with their respective lamination positions on the mold, which has a problem that the manufacturing cost increases.

As a second method, a three-dimensional shape of a fan blade is regarded as a laminate, each layer constituting the laminate is then approximated as a set of developable surfaces, and a UD prepreg cut into each developable surface shape is laminated on a mold and molded. Here, the developable surface refers to a curved surface having a shape that can be developed into a plane without expansion and contraction.

According to this method, unlike the first method, only one UD prepreg needs to be prepared for each layer, making it possible to avoid the problem of the increase in manufacturing cost.

However, the UD prepreg usually has a plurality of cutout portions. Therefore, the reinforcing fibers are cut at the cutout portions, and the reinforcing fibers are oriented in different directions at sites separated by the cutout portions. Therefore, in the fan blade manufactured by this method, the reinforcing fibers are cut at the cutout portions of the UD prepreg, and the orientation direction of the reinforcing fibers changes discontinuously, which has a problem that required tensile strength cannot be obtained.

As a third method, tape-shaped UD prepregs (UD prepreg tapes) are laminated on a mold in such a manner that each UD prepreg tape extends in a preset direction for each layer using an automated fiber placement (AFP) technique, and is molded. In this method, the UD prepreg tapes are laminated with as little steering (in-plane bending) as possible to prevent an overlap between two UD prepreg tapes adjacent to each other when being laminated, while allowing a gap to occur between these two UD prepreg tapes. The resulting gap is filled by separately laminating a UD prepreg tape cut to fit the shape.

However, even though the gap once generated is filled with the separately laminated UD prepreg tape, it is difficult to completely eliminate an occurrence of a gap and/or an overlap between the UD prepreg tapes. If the gap and/or the overlap remains, defects such as voids may occur after molding. In addition, the reinforcing fibers contained in the UD prepreg tape laminated to fill the gap are short in many cases, which is not preferable from the viewpoint of ensuring the necessary tensile strength.

As a fourth method, similarly to the third method, UD prepreg tapes are laminated on a mold in such a manner that each UD prepreg tape extends in a preset direction for each layer using an AFP technique, and are molded. However, in this method, the UD prepreg tapes are laminated while being steered as necessary so that neither a gap nor an overlap occurs between two UD prepreg tapes adjacent to each other when being laminated.

However, when the UD prepreg tape is bent in the in-plane direction, the reinforcing fibers undulate in-plane or out-of-plane, and the undulation causes a defect after molding. By using small-width (that is, thin) UD prepreg tapes, it is possible to reduce a difference in circumferential length between an inner circumference and an outer circumference of the steered portion and to minimize the undulation of the reinforcing fibers, but the number of necessary UD prepreg tapes increases, and there is a possibility that a defect occurs due to the undulation although it is at a level that can be ignored in practice.

As described above, in the conventional methods, it has been difficult to manufacture a fan blade made of a fiber-reinforced composite material having a complicated three-dimensional shape without causing a defect while ensuring necessary tensile strength.

### Summary of the Invention

### Problems to be solved by the Invention

The present disclosure has been made in view of the above-described problems, and an object of the present disclosure is to provide a method capable of manufacturing a fan blade made of a fiber-reinforced composite material having a complicated three-dimensional shape without causing a defect while ensuring necessary tensile strength.

### Means for Solving the Problems

In order to solve the aforementioned problems, a method for manufacturing a fan blade made of a fiber-reinforced composite material includes: regarding the fan blade as a laminate; approximating each layer constituting the laminate as a plurality of strip-shaped bodies arranged in a direction transverse to a longitudinal direction, each having a constant width over an entire length in the longitudinal direction in a developable surface shape; molding strip-shaped UD prepreg made of the fiber-reinforced composite material into a planar shape obtained by developing each of the developable surfaces; forming the laminate by repeating a process of forming each of the layers by laminating the strip-shaped UD prepreg on a mold; and molding the formed laminate.

### Advantageous Effects of the Invention

According to the present disclosure, it is possible to manufacture a fan blade made of a fiber-reinforced composite material having a complicated three-dimensional shape without causing a defect while ensuring necessary tensile strength.

### Brief Description of the Drawings

FIG. 1A is a schematic explanatory diagram illustrating a situation in which a three-dimensional shape of a fan blade is regarded as a laminate, and each layer constituting the laminate is then approximated as a plurality of strip-shaped bodies arranged in a direction transverse to a spanwise direction, each having a constant width over an entire length in a longitudinal direction in a developable surface shape.
FIG. 1B is a schematic explanatory diagram illustrating a shape of a curved UD prepreg tape obtained by developing the developable surface shape of each of the plurality of strip-shaped bodies of FIG. 1A into a plane, the UD prepreg tape having reinforcing fibers oriented in the longitudinal direction.
FIG. 2A is a schematic explanatory diagram illustrating a situation in which the curved UD prepreg tape of FIG. 1B is laminated on a mold.
FIG. 2B is a schematic explanatory diagram illustrating a situation in which an additional curved UD prepreg tape is laminated on the layer already formed on the mold in a case where a matrix resin of a fiber-reinforced composite material constituting the curved UD prepreg tape is thermosetting.
FIG. 2C is a schematic explanatory diagram illustrating a situation in which an additional curved UD prepreg tape is laminated on the layer already formed on the mold in a case where a matrix resin of a fiber-reinforced composite material constituting the curved UD prepreg tape is thermoplastic.

### Mode for Carrying out the Invention

Hereinafter, a manufacturing method according to an embodiment of the present disclosure will be described in detail with reference to the drawings.

The manufacturing method according to the present disclosure includes: regarding a fan blade as a laminate; approximating each layer constituting the laminate as a plurality of strip-shaped bodies arranged in a direction transverse to a longitudinal direction, each having a constant width over an entire length in the longitudinal direction in a developable surface shape; molding strip-shaped UD prepreg made of a fiber-reinforced composite material into a planar shape obtained by developing each of the developable surfaces; forming the laminate by repeating a process of forming each layer by laminating the strip-shaped UD prepreg on a mold; and finally molding the laminate.

Here, the fiber-reinforced composite material constituting the UD prepreg can contain, for example, carbon fibers as reinforcing fibers, and either a thermosetting matrix resin or a thermoplastic matrix resin can be used as the matrix resin impregnated into the reinforcing fibers. The reinforcing fibers are oriented in one direction in the UD prepreg.

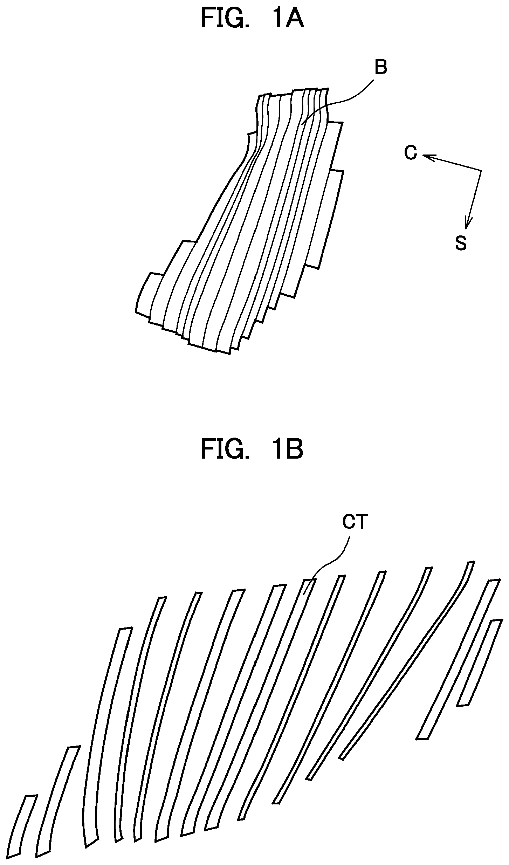

FIGS. 1A and 1B are schematic explanatory diagrams illustrating steps until curved UD prepreg tapes to be laminated are obtained in the above-described manufacturing method.

In these steps, first, a three-dimensional shape of a fan blade is regarded as a laminate, and each layer constituting the laminate is then approximated by a computer (for example, using three-dimensional CAD software or the like) as a plurality of strip-shaped bodies B arranged as illustrated in FIG. 1A, each having a constant width over its entire length in the longitudinal direction in a developable surface shape. The developable surface is a curved surface having a shape that can be developed into a plane without expansion or contraction. The width of each of the strip-shaped bodies B is selected such that the error of the approximation described above falls within an allowable range.

Next, the planar shape obtained by developing the developable surface shape of each of the plurality of strip-shaped bodies B described above is determined similarly by the computer. Then, a UD prepreg tape having the same width as each of the plurality of strip-shaped bodies B described above with reinforcing fibers oriented in its longitudinal direction is molded into the obtained planar shape, for example, by using an AFP method that involves steering (in-plane bending).

By doing so, a plurality of curved UD prepreg tapes CT, each having a planar shape and having a site bent in a direction transverse to its longitudinal direction, is obtained (see FIG. 1B).

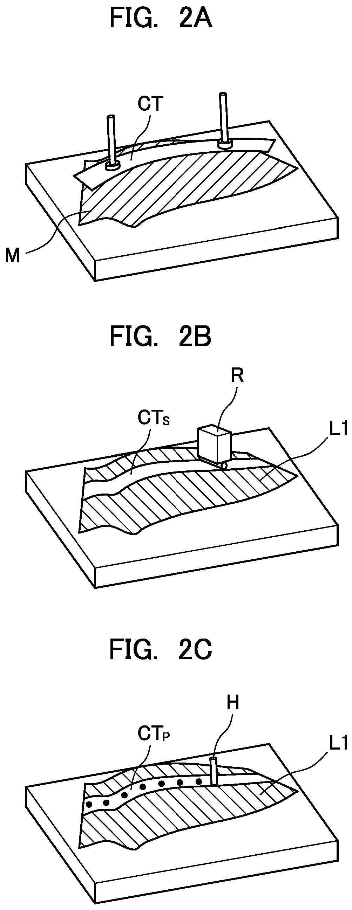

Next, a step of laminating the plurality of curved UD prepreg tapes obtained in FIGS. 1A and 1B on the mold will be described below with reference to FIGS. 2A to 2C.

FIGS. 2A to 2C are schematic explanatory diagrams illustrating a step of laminating a plurality of curved UD prepreg tapes on the mold in the above-described manufacturing method.

FIG. 2A illustrates a situation in which one of the curved UD prepreg tapes CT is laminated on a mold M to form a first layer L1 of UD prepreg on the mold M.

Even if the matrix resin of the fiber-reinforced composite material constituting the UD prepreg is either thermosetting or thermoplastic, merely placing the curved UD prepreg tape CT on the mold M (typically made of metal or composite material) does not allow the curved UD prepreg tape CT to be fixed to the mold M. Therefore, the curved UD prepreg tape CT forming the first layer L1 of UD prepreg is laminated on the mold M using a vacuum suction method.

In this manner, by sequentially laminating curved UD prepreg tapes CT on the mold M side by side in a direction transverse to its longitudinal direction, the first layer L1 of UD prepreg is finally formed.

FIG. 2B illustrates a situation in which, in a case where the matrix resin of the fiber-reinforced composite material constituting the UD prepreg is thermosetting, one curved UD prepreg tape CT_{S} is laminated on the first layer L1 of UD prepreg to form a second layer of UD prepreg.

Since the thermosetting resin has tackiness (stickiness) even at room temperature, the curved UD prepreg tape CT_{S} can be fixed to the surface of the first layer L1 of UD prepreg by pressing them against each other. For this purpose, for example, a roller R that rolls on the curved UD prepreg tape CT_{S} along the longitudinal direction can be used as illustrated.

FIG. 2C illustrates a situation in which, in a case where the matrix resin of the fiber-reinforced composite material constituting the UD prepreg is thermoplastic, one curved UD prepreg tape CT_{P} is laminated on the first layer L1 of UD prepreg to form a second layer of UD prepreg on the mold M.

Since the thermoplastic resin does not have tackiness at room temperature, two upper and lower layers of UD prepreg can be spot-welded and fixed to each other by heating a plurality of places (places indicated by black dots in the drawing) arranged along the longitudinal direction of the curved UD prepreg tape CT_{P} placed on the first layer L1 of UD prepreg in a pinpoint manner, for example, using a heater H.

By sequentially laminating curved UD prepreg tapes (CT_{S} or CT_{P}) on the first layer L1 of UD prepreg side by side in a direction transverse to their longitudinal direction using the method described with reference to FIGS. 2B and 2C, a second layer of UD prepreg is finally formed.

Further, similarly, curved UD prepreg tapes for the third and subsequent layers are laminated until the laminate of UD prepreg has a predetermined shape (that is, the shape of a fan blade). Then, the laminate of UD prepreg having a predetermined shape is molded under high temperature and high pressure, for example, using an autoclave, thereby completing a fan blade.

In the laminate of UD prepreg, which is an intermediate product when a fan blade is manufactured by the method described above, the curved UD prepreg tapes constituting each layer are arranged in a direction transverse to their longitudinal direction without causing any gap or overlap. Therefore, the fan blade obtained by molding the laminate does not include a defect.

In the laminate, the curved UD prepreg tapes constituting each layer contain reinforcing fibers oriented in their longitudinal direction, and the reinforcing fibers remain continuous over the entire length. Therefore, the fan blade obtained by molding the laminate has necessary strength against a centrifugal force or a local impact such as a bird strike.

### (Aspects of Present Disclosure)

According to a first aspect of the present disclosure, a method for manufacturing a fan blade made of a fiber-reinforced composite material includes: regarding the fan blade as a laminate; approximating each layer constituting the laminate as a plurality of strip-shaped bodies arranged in a direction transverse to a longitudinal direction, each having a constant width over an entire length in the longitudinal direction in a developable surface shape; molding strip-shaped UD prepreg made of the fiber-reinforced composite material into a planar shape obtained by developing each of the developable surfaces; forming the laminate by repeating a process of forming each of the layers by laminating the strip-shaped UD prepreg on a mold; and molding the formed laminate.

According to a second aspect of the present disclosure, in the method for manufacturing a fan blade made of a fiber-reinforced composite material, a vacuum suction method is applied when the strip-shaped UD prepreg is initially laminated on the mold.

According to a third aspect of the present disclosure, in the method for manufacturing a fan blade made of a fiber-reinforced composite material, the fiber-reinforced composite material contains a thermosetting resin, and when the strip-shaped UD prepreg is laminated on a layer already formed on the mold to form a next layer, the strip-shaped UD prepreg is pressed against and thereby fixed to the already formed layer.

According to a fourth aspect of the present disclosure, in the method for manufacturing a fan blade made of a fiber-reinforced composite material, the fiber-reinforced composite material contains a thermoplastic resin, and when the strip-shaped UD prepreg is laminated on a layer already formed on the mold to form a next layer, the strip-shaped UD prepreg is fixed to the already formed layer by spot welding.

### Explanation of Reference Signs

- B: Strip-shaped body
- C: Chordwise direction
- CT: Curved UD prepreg tape
- CT_{P}: Curved UD prepreg tape (matrix resin: thermoplastic)
- CT_{S}: Curved UD prepreg tape (matrix resin: thermosetting)
- H: Heater
- L1: First layer of UD prepreg
- M: Mold
- R: Roller
- S: Spanwise direction

## Claims

1. A method for manufacturing a fan blade made of a fiber-reinforced composite material, the method comprising:
regarding the fan blade as a laminate;
approximating each layer constituting the laminate as a plurality of strip-shaped bodies arranged in a direction transverse to a longitudinal direction, each having a constant width over an entire length in the longitudinal direction in a developable surface shape;
molding strip-shaped UD prepreg made of the fiber-reinforced composite material into a planar shape obtained by developing each of the developable surfaces;
forming the laminate by repeating a process of forming each of the layers by laminating the strip-shaped UD prepreg on a mold; and
molding the formed laminate.

2. The method according to claim 1, wherein a vacuum suction method is applied when the strip-shaped UD prepreg is initially laminated on the mold.

3. The method according to claim 2, wherein the fiber-reinforced composite material contains a thermosetting resin, and when the strip-shaped UD prepreg is laminated on a layer already formed on the mold to form a next layer, the strip-shaped UD prepreg is pressed against and thereby fixed to the already formed layer.

4. The method according to claim 2, wherein the fiber-reinforced composite material contains a thermoplastic resin, and when the strip-shaped UD prepreg is laminated on a layer already formed on the mold to form a next layer, the strip-shaped UD prepreg is fixed to the already formed layer by spot welding.
